# EUROPEAN PATENT APPLICATION

(11) **EP 2 109 070 A1**
(43) Date of publication of application: **14.10.2009**
(21) Application number: 07801054.3
(22) Date of filing: 06.09.2007
(51) Int. Cl.: G06Q 10/00

(54) **A METHOD AND DEVICE FOR SELECTING THE WORK FLOW ROUTE**

(30) Priority: 30.01.2007 CN 200710002777
(71) Applicant: Huawei Technologies Co., Ltd., Longgang District Shenzhen Guangdong 518129 (CN)
(72) Inventor: KANG, Quansheng, Shenzhen Guangdong 518129 (CN)
(74) Representative: Thun, Clemens
(86) International application number: PCT/CN2007/070646
(87) International publication number: WO 2008/092344

(57) **Abstract**

A method for selecting a workflow route includes: determining a next processing phase of the work sheet to be processed and the work sheet properties in the phase; querying a pre-configured mapping table between work sheet properties and processing owners according to the work sheet properties in the next processing phase and obtaining a matched processing owner for the next processing phase of the work sheet to be processed. An apparatus for selecting a workflow route includes a work sheet predefining module, a processing owner matching module, an inputting module and a matching module. The technical solution provided in an embodiment of the invention may solve the problem of too heavy workload and proneness to errors caused by manually selecting a processing owner for a phase of a work sheet, and may also solve the problem of too many processes caused by binding processing owners with the processes.

## Description

### Field of the Invention

The invention relates to the process management field, and in particular, to a method and apparatus for selecting a workflow route.

### Background of the Invention

At present, collaborative workflow is the most widely applied workflow in the office automation system and the customer relationship management (CRM) system. Currently, in the process of most collaborative workflow systems, there are generally two methods for selecting a workflow route, i.e., selecting the processing owner of a next processing phase in a workflow. The first method is to predefine a processing owner of each phase when defining a process. When the system operates according to the predefined process, the system automatically determines the processing owner of the next phase according to the predefined processing owner of each phase.

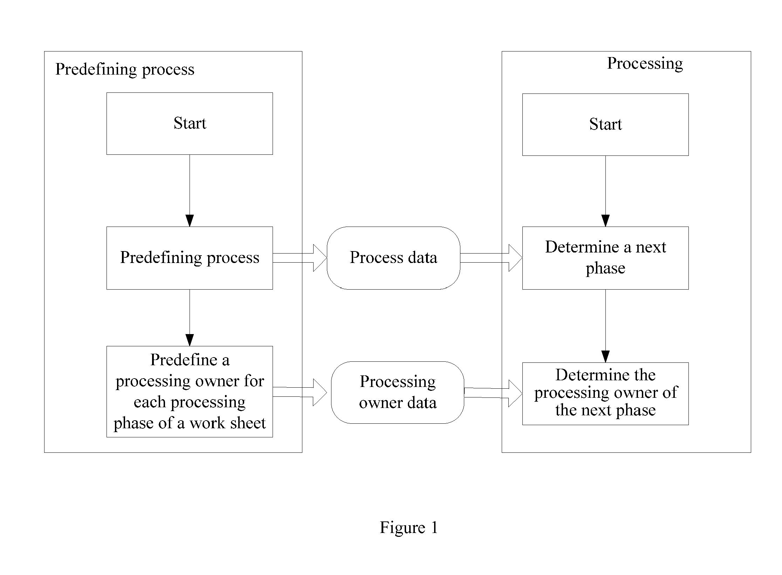

Figure 1 shows the operation principle of the first method. In general, the first method includes a predefining process and an operating process. The predefining process includes: defining a work sheet process, outputting process data, defining a processing owner for each phase of the process, and outputting the processing owner data. In the work sheet operating process, the system first determines the next processing phase according to the process data output in the predefining process, and then figures out the processing owner of a work sheet in the next processing phase according to the processing phases of the work sheet and the processing owner data output in the predefining process, thus realizing automatic dispatch of work sheets. Here, a work sheet is a specific task instance circulated in a collaborative workflow, and a process is a predefined work sheet process.

As for this method, since the processing owner for each phase in a process is predefined, for a same phase in a same process, when the processing owner is different, individual process needs to be defined separately. Therefore, this technical solution results in too many processes, which causes difficulties in process maintenance and management and is prone to errors.

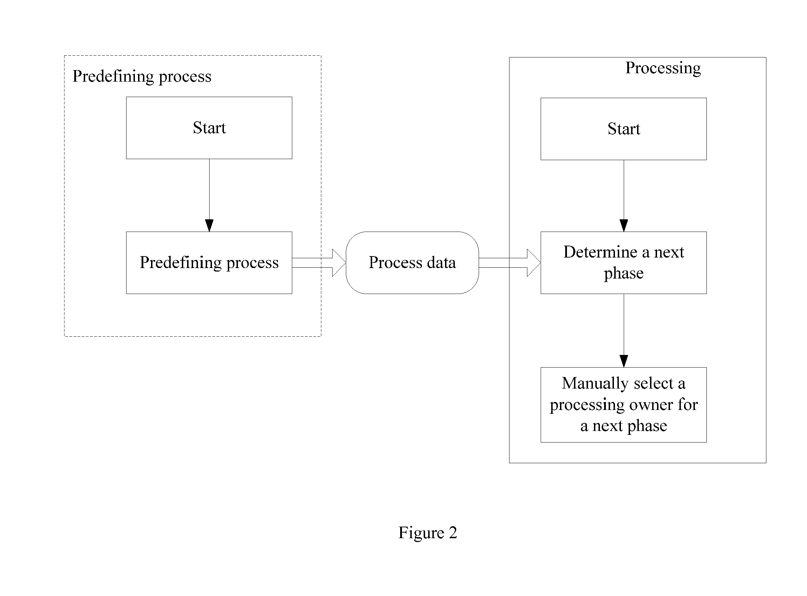

Figure 2 shows the operation principle of the second method. In the operating process, a work sheet dispatcher manually determines the processing owner for a next phase. As for this method, in the operating process, it involves a large amount of workload to manually select processing owners, which brings a heavy workload to the work sheet dispatcher and poses higher skill requirements for the work sheet dispatcher, requiring him/her to record the processing owner for each phase in a process. In addition, operations in the process are prone to errors.

To sum up, it involves a heavy workload to maintain and manage workflows in the prior art, and the operation methods are prone to errors.

### Summary of the Invention

An embodiment of the invention provides a method and an apparatus for selecting a workflow route, which may reduce the difficulty and complexity of workflow maintenance.

A method for selecting a workflow route includes the following steps:

determining a next processing phase of a work sheet to be processed and work sheet properties in the phase; and

querying a pre-configured mapping table between work sheet properties and processing owners according to the work sheet property and obtaining a matched processing owner for the next processing phase of the work sheet to be processed.

An apparatus for selecting a workflow route includes:

a work sheet predefining module, adapted to store predefined processing phases of a work sheet, the sequence of the processing phases and work sheet properties in the processing phases;

a processing owner configuring module, adapted to store a predefined mapping table between work sheet processing owners and work sheet property fields;

an inputting module, adapted to receive the work sheet property fields of a work sheet to be processed; and

a matching module, adapted to query the work sheet predefining module, obtain a next processing phase of a work sheet to be processed, match the work sheet property fields in the next processing phase from the inputting module and the mapping table stored in the processing owner matching module, and obtain the processing owner for the next processing phase of the work sheet to be processed.

According to the above technical solution, in the work sheet process, the processing owner for the current phase is automatically selected according to the pre-generated mapping relationship, which solves the problem of heavy workload and proneness to errors caused by manually selecting a processing owner for a phase of a work sheet. Defining a processing owner is unrelated to a specific work sheet process, which solves the problem of too many processes caused by binding processing owners with processes, enables multiple services to share one process and facilitates maintenance for work sheets.

### Brief Description of the Drawings

Figure 1 is a schematic diagram illustrating the principle of the first method in the

### prior art;

Figure 2 is a schematic diagram illustrating the principle of the second method in the prior art;

Figure 3 is a flow chart of selecting a processing owner for a next phase of a work sheet according to an embodiment of the invention; and

Figure 4 is a schematic diagram illustrating an apparatus for selecting a workflow route according to an embodiment of the invention.

### Detailed Description of the Invention

According to a method for selecting a workflow route provided in an embodiment of the invention, the system automatically determines a processing owner for a next phase of a work sheet. A processing owner is not uniquely determined by the phases of a work sheet. Instead, the processing owner is determined by work sheet properties based on certain rules. A work sheet property includes related information of a work sheet. For example, the property of a customer complaint work sheet includes the customer's brand, class, phase, emergency degree, region, processing time, and so on, in which phases include handling, review, processing, feedback, revisit and closing.

A method for selecting a workflow route provided in an embodiment of the invention includes the following two basic steps:

Step A: Pre-generating a mapping table between processing owners of a work sheet and work sheet properties.

Step B: During the processing of the work sheet, querying the mapping table according to the work sheet properties of a next processing phase and obtaining a matched processing owner for the next processing phase.

To realize the technical solution in an embodiment of the invention, a mapping table between work sheet properties and processing owners needs to be pre-generated. The mapping table is also called the processing owner configuration table (hereinafter referred to as configuration table). The configuration table may not be associated with any processing phase of a work sheet, and may be maintained independently of the processing phases. In the vertical direction of the configuration table are different processing owners, and in the horizontal direction of the configuration table are different work sheet properties. Because one processing owner may process multiple phases of various types of work sheets, in the vertical direction of the configuration table, there may be multiple items associating a same processing owner. In this case, processing owners and work sheet properties form a multiple-to-multiple relationship. When there is a change to a processing owner, for example, business trip, leave and replacement, only the time property of the processing owner in the configuration table needs to be set accordingly. If a processing owner resigns, related items of the processing owner shall be deleted from the configuration table, so that the work sheet can operate automatically according to the configuration without adjusting the work sheet process. When a work sheet property changes, for example, the emergency degree of the work sheet property changes to emergent from normal, the configuration table only needs to be modified accordingly. Afterward, the work sheet automatically adapts to the change of the processing owner and completes intelligent route selection.

For a complaint process, the customer's brand, class, processing phase, emergency degree, city and processing time are factors that may affect a processing owner. Therefore, the above factors are all used as work sheet properties, and a configuration table is generated, as shown in Table 1:

**Table 1**

| Owner | Brand | Class | Processing phase | Emergency degree | City | Processing time |
|---|---|---|---|---|---|---|
| Zhang | GoTone | Gold card | Review | All | Shenzhen | 2006-08-11 - 2006-09-30 |
| Zhang | GoTone | Diamond card | Review | All | Shenzhen | 2006-08-11 - 2006-09-30 |
| Li | GoTone | Gold card | Review | All | Shenzhen | 2006-09-30 - 2009-12-30 |
| Li | GoTone | Diamond card | Review | All | Shenzhen | 2006-09-30 - 2009-12-30 |
| Wang | M-Zone | Normal | Verifying | Emergent | Shenzhen | 2006-08-11 - 2009-12-30 |
| Zhao | Easyown | Normal | Review | Normal | Guang Zhou | 2006-08-11 - 2009-12-30 |
| ··· | ··· | ··· | ··· | ··· | ··· | ··· |

After the above mapping table is generated, during the processing of a complaint work sheet, assume that a newly handled complaint work sheet has the following properties: the customer's brand is GoTone, the class is gold card, the city is Shenzhen, and the current time is Aug. 12, 2006. The work sheet operates according to a predefined process. According to the predefined complaint work sheet process, the next phase for handling the complaint work sheet is review, then who is the processing owner for conducting the review?

First, match the city of the customer, so that Zhang, Li and Wang can be selected; since the owners are more than one, match the brand, and Wang is excluded; in the end, match the processing time required by the work sheet by using the time property, and Zhang is found to be the only processing owner.

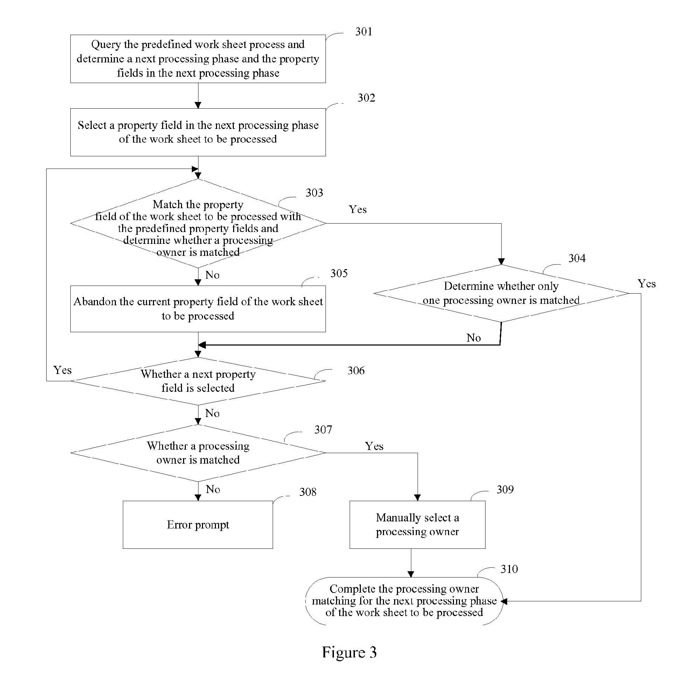

Figure 3 shows the process of selecting a workflow route according to an embodiment of the invention, including the following steps:

Step 301: Query the predefined work sheet process and determine a next processing phase and the property fields corresponding to the phase.

Step 302: Select a property field in the next processing phase of the work sheet to be processed.

Step 303: According to the configuration table, match the selected property field of the work sheet to be processed with the determined predefined property field and judge whether a processing owner is matched. If so, execute step 304; otherwise, execute step 305.

In this step, the matching between the processing time required by the work sheet to be processed and the time property of the processing owner may be performed in preference. Since the change of the time property reflects the personnel change, the personnel change has been taken into consideration when the processing owner is matched in the end. No manual adjustment is needed.

Step 304: Judge whether the matched processing owner is unique. If so, execute step 310; otherwise, execute step 306.

Step 305: Abandon the current property field of the work sheet to be processed.

Step 306: Select a next property field of the work sheet to be processed. If the next property field is selected, execute step 303; if no property field is selected, execute step 307.

Step 307: Judge whether a processing owner is matched. If so, execute step 309; otherwise, execute step 308.

Step 308: Since no processing owner for the next phase is matched, output an error prompt and end the process.

Step 309: From the matched processing owners, select one processing owner according to a certain rule. The certain rule is an additional rule not included in the configuration table, for example, select a processing owner according to the workload, that is, select a processing owner whose current workload is the lightest, or select a processing owner at random.

Step 310: A unique processing owner is selected for the next phase of the work sheet to be processed. The process ends successfully.

In order to quickly complete the process, different priorities may be set for different property fields. In step 302, first select the property fields with relatively higher priorities, and then execute subsequent steps. In this way, the number of processes may be reduced. For example, in the complaint work sheet described above, if priorities are set for the work sheet properties, and the brand, time property and location are allocated with priorities in a descending order, the brand is selected first for matching. Zhang and Li can be matched. Then the time property is selected for matching. Zhang is matched as the unique processing owner. In this case, the process is completed only after two rounds of matching. This is just an example, and setting of priorities for the work sheet properties may be adjusted flexibly based on practical requirements.

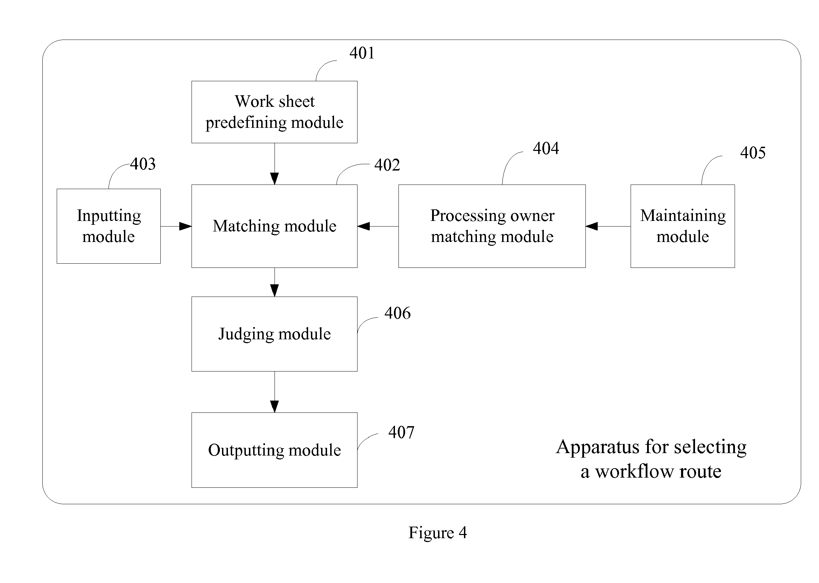

Figure 4 shows an apparatus for selecting a workflow route provided in an embodiment of the invention, including: a work sheet predefining module 401, a matching module 402, an inputting module 403, a processing owner configuring module 404, a maintaining module 405, a judging module 406 and an outputting module 407.

The work sheet predefining module 401 is adapted to store predefined work sheet related information, including processing phases, the sequence of processing phases and work sheet properties.

The matching module 402 is adapted to query the work sheet predefining module 401, obtain a next processing phase of the work sheet to be processed, match the work sheet property field in the next processing phase from the inputting module 403 with the mapping table stored in the processing owner configuring module 404, and obtain a processing owner for the next processing phase of the work sheet to be processed.

The inputting module 403 is adapted to receive the work sheet property fields of a work sheet to be processed.

The processing owner configuring module 404 is adapted to store a predefined mapping table between processing owners and work sheet property fields.

The maintenance module 405 is adapted to add, delete or modify processing owners or work sheet property fields stored in the processing owner configuring module.

The judging module 406 is adapted to judge whether the matching module obtains a processing owner. If so, it generates output information containing the processing owner; otherwise, it generates an error prompt.

The outputting module 407 is adapted to output the output information or the error prompt information generated by the judging module.

The apparatus for selecting a workflow route may be realized by a computer running a relevant program on a storage medium.

The technical solution of the invention first solves the problem of too heavy workload and proneness to errors caused by manually selecting a processing owner for each phase of a work sheet. Since defining a processing owner is unrelated to the specific work sheet process, the technical solution of the invention secondly solves the problem of binding processing owners with processes, enables multiple services to share one process and solves the problem of difficulty in maintaining a large number of processes.

Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for selecting a workflow route, comprising:
determining a next processing phase of a work sheet to be processed and the work sheet properties corresponding to the next processing phase;
matching the work sheet property with a predefined mapping table between work sheet properties and processing owners to obtain a processing owner for the next processing phase of the work sheet to be processed.

2. The method of claim 1, wherein the determining a next processing phase of a work sheet to be processed and the work sheet properties corresponding to the next processing phase comprises:
querying a predefined work sheet process; and
determining a next processing phase of the work sheet to be processed and the work sheet properties corresponding to the next processing phase.

3. The method of claim 1, wherein the matching the work sheet property with a predefined mapping table between work sheet properties and processing owners to obtain a processing owner for the next processing phase of the work sheet to be processedcomprises:
matching the determined work sheet property with the predefined mapping table between work sheet properties and processing owners; and
obtaining a unique processing owner.

4. The method of claim 3, wherein the obtaining a unique processing owner comprises:
selecting the work sheet property in the next processing phase of the work sheet to be processed; and
matching the selected work sheet property with the predefined mapping table between work sheet properties and processing owners and judging whether a processing owner is matched; if so, further judging whether the matched processing owner is unique; if so, ending the process.

5. The method of claim 4, wherein the process of pre-generating a mapping table between work sheet properties and processing owners comprises: setting a priority for each work sheet property; and
the selecting the work sheet property in the next processing phase of the work sheet to be processed comprises: selecting the work sheet property with the higher priority in the next processing phase of the work sheet to be processed.

6. The method of claim 4, wherein judging whether the matched processing owner is unique further comprises: if the matched processing owner is not unique, judging whether a next property field of the work sheet to be processed is successfully selected; if so, going to the process of matching the selected work sheet property with the predefined mapping table between work sheet properties and processing owners.

7. The method of claim 4, claim 5 or claim 6, wherein judging whether a processing owner is matched further comprises:
if no processing owner is matched, abandoning the current property field of the work sheet to be processed and judging whether a next property field of the work sheet to be processed is successfully selected; if so, going to the process of matching the selected work sheet property with the predefined mapping table between work sheet properties and processing owners.

8. The method of claim 7, further comprising:
if a next property field of the work sheet to be processed is not successfully selected, judging whether a processing owner is matched; if so, selecting one processing owner among the matched processing owners according to a preset rule; otherwise, outputting an error prompt.

9. The method of claim 8, wherein the selecting one processing owner among the matched processing owners according to a preset rule comprises:
selecting a processing owner with the lightest workload among the matched processing owners, or selecting a processing owner at random among the matched processing owners.

10. An apparatus for selecting a workflow route, comprising:
a work sheet predefining module, adapted to store predefined processing phases of a work sheet, work sheet properties ,and a sequence of the processing phases;
a processing owner configuring module, adapted to store a predefined mapping table between processing owners and work sheet property fields;
an inputting module, adapted to receive work sheet property fields of the work sheet; and
a matching module, adapted to query the work sheet predefining module, obtain a next processing phase of the work sheet to be processed, match the work sheet property field in the next processing phase from the inputting module and the mapping table stored in the processing owner configuring module, and obtain the processing owner for the next processing phase of the work sheet to be processed.

11. The apparatus of claim 10, wherein the work sheet property fields in the mapping table stored in the processing owner configuring module comprise the time property of processing owners.

12. The apparatus of claim 10 further comprising a maintenance module, adapted to add, delete or modify a processing owner or a work sheet property field stored in the processing owner configuring module.

13. The apparatus of claim 10, claim 11 or claim 12 further comprising a judging module, adapted to judge whether the matching module obtains a processing owner; if so, generating output information containing the processing owner; otherwise, generating an error prompt.

14. The apparatus of claim 10, claim 11 or claim 12, wherein the apparatus is a computer running a relevant program on a storage media.
